Europäisches Patentamt

(19) European Patent Office

Office européen des brevets

(11) Publication number: **0 052 757**
**B1**

(12) **EUROPEAN PATENT SPECIFICATION**

(45) Date of publication of patent specification: **03.01.90**

(21) Application number: **81108567.9**

(22) Date of filing: **20.10.81**

(51) Int. Cl.⁵: **G 06 F 15/20**

(54) Method of decoding phrases and obtaining a readout of events in a text processing system.

(30) Priority: **20.11.80 US 208895**

(43) Date of publication of application:
**02.06.82 Bulletin 82/22**

(45) Publication of the grant of the patent:
**03.01.90 Bulletin 90/01**

(84) Designated Contracting States:
**DE FR GB IT**

(56) References cited:
**EP-A-0 014 312**
**FR-A-2 319 937**
**US-A-4 214 125**

(73) Proprietor: **International Business Machines Corporation**
**Old Orchard Road**
**Armonk, N.Y. 10504 (US)**

(72) Inventor: **Deacon, John Joseph**
**6706 Rustling Oaks Trail**
**Austin Texas 78759 (US)**
Inventor: **Wood, Donald Edwin**
**8115 Brettonwoods**
**Austin Texas 78753 (US)**

(74) Representative: **Bonneau, Gérard**
**Compagnie IBM France Département de Propriété Intellectuelle**
**F-06610 La Gaude (FR)**

## Description

This invention generally relates to efficiently and economically obtaining a readout of text processing system events and more specifically, relates to a method for decoding phrases in order to obtain a readout of the events in a text processing system.

In the text processing systems coding on a byte value/frequency of use basis is well known. Decoding of such coding is also well known, but the various decoding techniques are cumbersome, time consuming, and inefficient. Consider the environment as a word processing system including a keyboard, display, and floppy disk reader/recorder. If a basic requirement for continued system performance is that the door on the reader/recorder be closed (except during the loading and unloading of a disk), an operator must be alerted of the fact of an open door. Providing an indication of an open door is fairly straight forward. In response to an open door, displaying "Close Diskette Door" to an operator would present minor problems if this were the only message to be displayed. This is not the case, though. A great many messages need to be presented to the operator in a flexible, multifunction word processing system. As the number of messages increases, so do storage requirements and costs. Byte value/frequency of use coding only solves part of the overall problem.

The instant invention as defined in Claim 1 presents an advance over the prior art in terms of a uniquely arranged and structured decode table and unique decoding techniques. As has been pointed out, the phrase table is made up of words encoded on a byte value/frequency of use basis. The decode table is also made up of words encoded on a byte value/frequency of use basis. In addition to word encoding on the same basis in both the decode and phrase tables, the words in the decode table are arranged or ordered by byte value, and each word has associated therewith its byte length. The byte length serves as index to the beginning of a succeeding word in, or the remainder of, the phrase for decoding. Some of the more important advantages of the above-mentioned advance are reduced storage requirements and improved response time. Response time in a keyboard/display word processing system is of critical importance from a human factor standpoint. A wait of a few seconds in such a system can appear "forever" to an operator. Response time is greatly reduced due to the structuring of, and technique of using, the decode table. Frequently used words appear at the top of the decode table and are therefore found early during an indexing of the table.

A unique method of, decoding phrases are provided in order to reduce storage requirements and improve response time. With the method of this invention, an operator can be provided with needed messages, alerted of events and errors, etc., in a timely manner without having to wait and guess why system operation has terminated.

An example of an event affecting system performance is a disk reader/recorder door which has been left open following a disk loading operation. An early indication of this event is desirable.

Upon receiving a message of event, the processor calls a message build program into operation. This message build program outputs a message number to a message frame index table to obtain therefrom an appropriate pointer into a phrase table. Upon receiving the message from the message index table, the phrase table pointer is advanced to the next pointer and the first pointer position is substracted from the second pointer position to obtain the number of bits included in the phrase. The bits making up the phrase are compared with the decode table comprising words coded and ordered on a byte value/frequency of use basis, until a match is found thereby providing a word pointer. The word pointer is provided to a word table containing words encoded on a user basis to define the beginning of a word to be displayed which is transferred to an output buffer the contents of which are then displayed when a test determines that the end of the phrase has been reached.

From the above, only four tables of minimum size are required. That is, the first table contains bit pointers for every phrase needed by the system. The second table although containing every phrase needed by the system, is of limited size due to the words being encoded on a byte value/frequency of use basis. The third table includes each word needed by the system along with an indication of the word length and a pointer to the fourth (word) table. The size of the fourth table is limited due to the fact that each word appears only one time.

The description of the invention is made hereafter with reference to the following drawings.

Figure 1 is a block diagram of a basic word processing system to which this invention is applicable.

Figure 2 illustrates details of the processor block shown in Figure 1.

Figure 3 illustrates the make-up of the memory block shown in Figure 1.

Figure 4 illustrates the arrangement of the decode table shown in Figure 3.

Figure 5 is a flow chart illustrating the operations performed by various of the blocks shown in Figure 3.

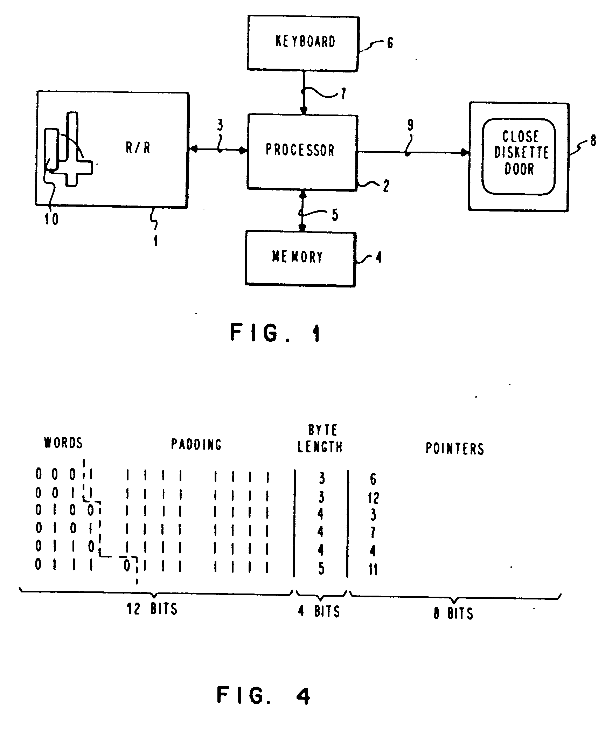

For a more detailed understanding of the invention, reference will first be made to Figure 1. In this figure are illustrated as part of a basic word processing system (minus a printer) 1. an open reader/recorder door event, and 2. a corresponding message displayed to an operator. The basic system includes a floppy disk reader/recorder 1 in two way communication with a processor 2 along bus 3. Processor 2 is in turn in two way communication with a random access memory 4 along bus 5. Also connected to processor 2 are a keyboard 6 along bus 7, and a CRT display 8 along bus 9.

The event of an open disk door 10 on reader/ recorder 1 has been chosen solely on the basis that it can be easily identified with. The full screen display of "Close Diskette Door" on the face of display 8 is exemplary only. In actual practice, such messages are displayed to an operator along a message line near the bottom of the screen. Among other messages which are displayed along the message line are "Do Remove Diskette - Data May be Lost" and "Insert Diskette A". Irrespective of the event, the principles of the instant invention and the structure for carrying out the instant invention are identical as far as the below described decode table is concerned.

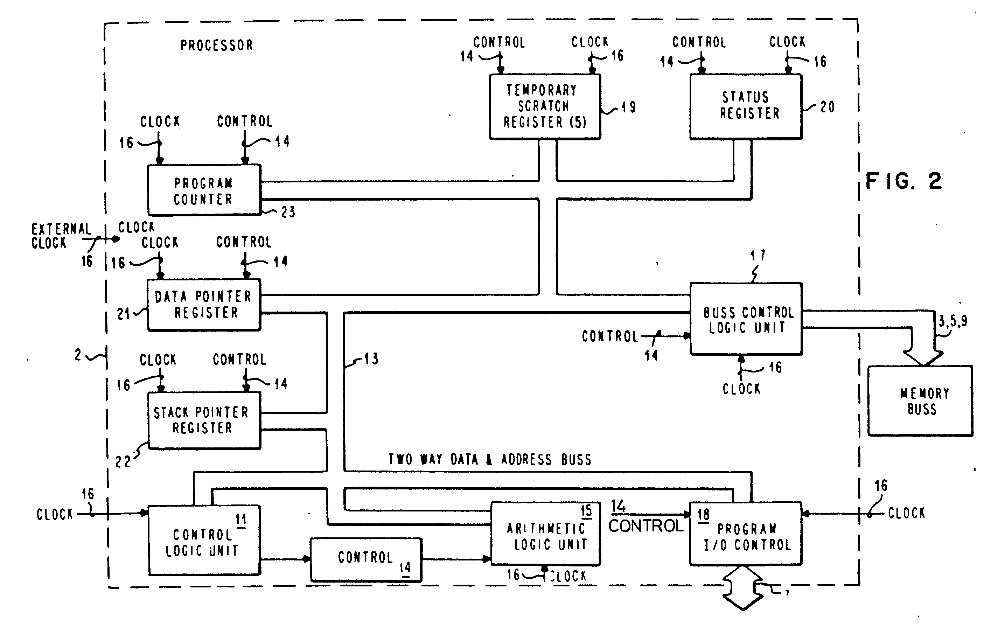

Refer next to figure 2. In this figure are shown the details of processor 2 which is capable of performing the operations of this invention under program control. In practice, processor 2 includes an INTEL 8086 Microcomputer chip. Typical logic hardware elements forming processor 2 include a control logic unit 11 which responds to instructions from memory 4 on bus 3. The control logic unit 11 is also in the data stream identified by the data and address bus 13 interconnected to various other logic units of processor 2.

In response to instructions from random access memory 4, control logic unit 11 generates control signals to other logic elements of processor 2. These control signals are interconnected to the various elements by means of a control line 14 which is illustrated directly connected to an arithmetic logic unit 15 and identified as a "control" line 14 to other elements of processor 2. Synchronous operation of the control unit 11 with other logic elements of processor 2 is achieved by means of clock pulses input to processor 2 from an external clock source on bus 16. This bus is also shown interconnected to various other logic elements of processor 2. In addition, bus 16 is connected to reader/recorder 1, display 8, and memory 4 shown in figure 1.

Data to be processed in processor 2 is input either through a bus control logic unit 17 or a program input/output control logic unit 18. The bus control logic 17 connects to random access memory 4 and receives instructions for processing data input to input/output control 18. Thus, input/output control 18 receives data from keyboard 6 while bus control logic 17 receives instructions from memory 4. Note that different storage sections of the memory 4 are identifiable for instruction storage and data storage. Device controls from processor 2 are output through program input/output controller 18 over a data bus 7.

Input data on the data bus 3 is passed internally through processor 2 on the bus 13 to control unit 11. Arithmetic logic unit 15, in response to a control signal on line 14 and in accordance with instructions received on memory bus 3, performs arithmetic computations which may be stored in temporary scratch registers 19. Various other transfers of data between the arithmetic logic unit 15 and other logic elements of processor 2 are of course possible. Such additional transfers may be to a status register 20, data pointer register 21 or a stack pointer register 22. Also in the data stream for these various logic elements by means of the bus 13 is a program counter 23.

A particular operating sequence for processor 2 is determined by instructions on bus 3 and input data on the bus 3 or on bus 7 from keyboard 6. As an example, in response to received instructions, processor 2 transfers data stored in scratch registers 19 to one of registers 21, 22 or 20. Such operations of processors as detailed in figure 2 are considered to be well known and understood by one of ordinary skill in the data processing field. A detailed description of each of the operations of the processor of figure 2 for the described invention would be useless for an understanding of the invention as claimed.

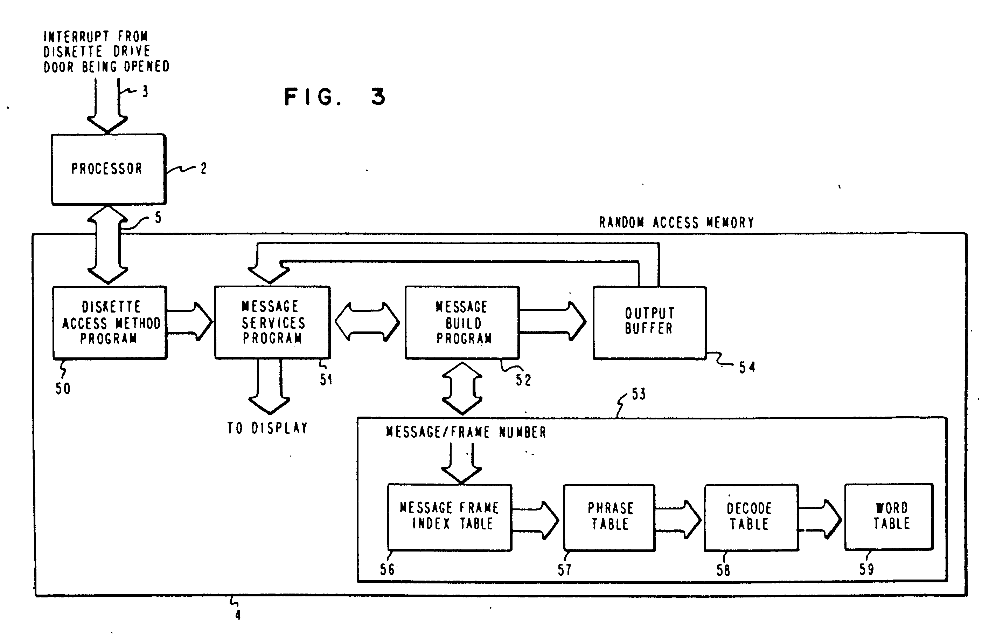

Refer next to figure 3. In this figure, make-up of memory 4 and connection of memory 4 to processor 2 are generally detailed. Memory 4 in the preferred embodiment is a random access memory divided into different sections of segments represented by the following described blocks. Upon a determination being made that door 10 is open when it should be closed, a signal is applied along bus 3 to processor 2. Processor 2 then accesses a diskette access method program represented by block 50. Operation within this program under the condition of an open door at a time when the door should be closed results in operation within a message services program represented by block 51. The purposes of program 51 are to call a message build program 52 into operation and ultimately cause a display of the "built" message by display 8. Since blocks 50 and 51 'form no part of this invention, further details will be omitted.

Of primary importance to this invention are the occurrence of an event signal value along line 3, message build program 52, table buffer 53, and output buffer 54. Program 50, 51 and 52 are stored in random access memory 4.

Output buffer 54 and table buffer 53 form a part of memory 4. Table buffer 53 has stored therein a message frame index table 56, a phrase table 57, a decode table 58, and a word table 59.

Message frame index table 56 is structured such that at a relative displacement of zero there is stored an offset to the maximum message frame index which is two bytes in length. At each succeeding relative displacement of 2, there exists a bit pointer to the beginning of a different phrase stored in phrase table 57. As such, each bit pointer is two bytes in length.

As to the arrangement of the contents of phrase table 57, each phrase needed by the system is stored beginning at a zero relative displacement. Each phrase is made up of a variable number of bits and the particular order of phrases in phrase table 57 is irrelevant as long as a correspondence is maintained with the pointers in table 56. What is of importance though, is that the words making up the phrases are encoded on a byte value/frequency of use basis. That is, the most popular words are coded with low byte values represented with a minimum number of bits. The least used words are coded with higher byte values represented with a greater number of bits. As such, storage requirements are significantly decreased. As an example, a three word phrase including two relatively popular words may require only 11 bits made up of 3, 3, and 5 bit words. As used herein, the words coded and encoded are equivalent.

In many applications, seven bit codes are used to represent each of the characters of the alphabet. For an eight character word, 56 bits are required for coding the word. By encoding each word based on a byte value and/or number of bits corresponding to frequency of use (without regard to the characters making up the words), the number of bits required to represent each of the phrases is significantly reduced. For example, if the word "a" is the most commonly used word, the binary coding could be 001. In like manner, the coding for a lower usage word such as "close" could be 0101. In the following, it is to be assumed that 12 bits are sufficient to represent any needed phrase. As a practical matter, 12 bits are considered sufficient to represent any phrase needed by a flexible, multifunction word processing system. It is appreciated though, that should one wish to enlarge the number of words available to the system, a greater number of bits might be required to represent a phrase.

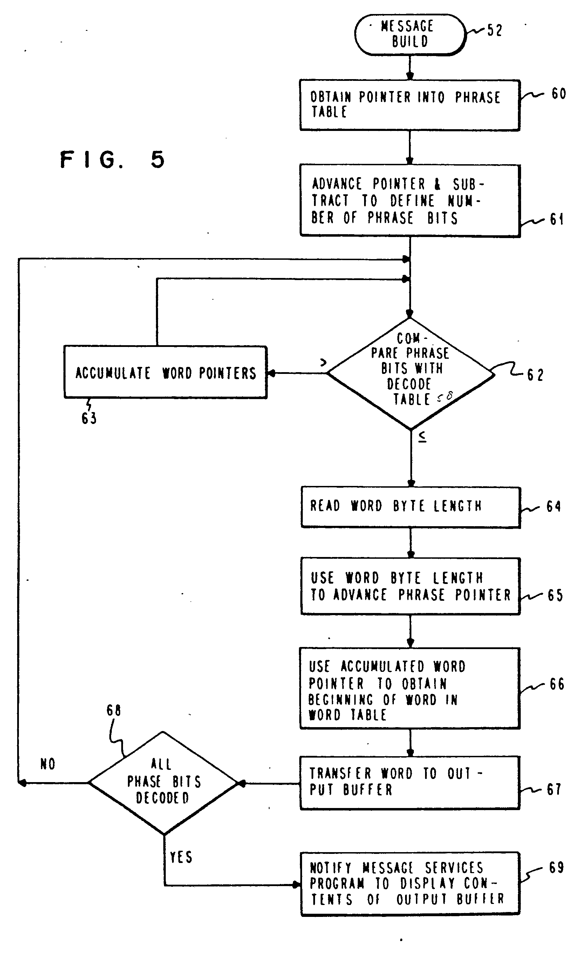

The 12-bit maximum phrase length referred to above forms the basis for the structuring of decode table 58. Located in table 58 at a zero relative bit displacement are coded words, padded with ones to obtain a total of 12 bits. That is, if the code word is actually represented with three bits, there will be nine ones added to the end thereof to make a 12-bit word. This is represented in figure 4. Associated with, an following, each coded word padded with ones and beginning at a relative bit displacement of 13 are four-bit positions which are available to represent the length of the coded word without the padded ones. In figure 4, base 10 numbers are used for purposes of clarity rather than binary coding. Beginning at relative bit displacement 17, and associated with each word, are 8 bit positions available for representing pointers to words in word table 59. Again, base 10 numbers are used.

In further explaining the pointers, it is to first be recalled that the coded words in word table 59 are user coded. If the user (display) requires a 7 bit code for each character, a product of the number of characters making up a word and 7 is the number of bits stored for the word. Those bits are stored at an index position defined by bytes in word table 59. Thus the first word in figure 4 is a 6 character word, the second is a 12 word, the third a 3 character word, and so forth. The index position of the second word is 6, and in like manner, the index position of the third word is 18. The above 24-bit structure appears in decode table 58 for each word which can be displayed by the system. The ordering of the code words in decode table 58 ranges from the lowest byte value at the top to the highest byte value at the bottom. These correspond to frequency of use. That is, each of the words is stored in table 58 in a probability decending order, and is assigned a byte value in ascending order as pictorially represented in figure 4.

The makeup of word table 59 beginning at a zero relative displacement includes words which are variable in number of bytes. As explained above, this is because each byte in table 59 represents a character rather than a word. The words in table 59 are used in making up phrases to be displayed to the operator.

Reference is next made to figure 5. Based on a single value received from processor 2 indicating that door 10 is open, message build program 52 outputs a message number to obtain, as indicated by logic sequence 60, an appropriate pointer from table 56 into phrase table 57. Message build program 52 then causes the phrase table pointer to be advanced to the beginning of the next phrase. The first pointer position is subtracted from the second pointer position to obtain the number of bits included in the phrase. This is indicated by logic sequence 61. Thereafter, as indicated by logic sequence 62, the bits making up the phrase are compared with decode table 58 sequentially indexing down through decode table 58. As long as there is a "greater than" compare, the word pointer is added to the cumulative pointer as indicated by logic sequence 63. Upon a "less than, or equal to" compare indicating a match, the word byte length, as illustrated in figure 4 and associated with the matched word in decode table 58, is read. This is indicated by logic sequence 64. Based on the word byte length, the word pointer is advanced in the phrase as indicated by logic sequence 65. Following the advancement of the word pointer, the cumulative word pointer associated with the word is read to obtain the beginning of the word in word table 59. This is indicated by logic sequence 66. As has been pointed out, the word in the word table is indicated by a variable number of bytes corresponding to the number of characters in the word. Following the defining of the word in word table 59, the word is transferred out of word table 59 into output buffer 54. This is indicated by logic sequence 67. Following transfer of a word into output buffer 54, a test, as indicated by logic sequence 68, is made to determine if the end of the phrase has been reached. If so, message services program 51 is notified to display the contents of output buffer 54. This is indicated by logic sequence 69. For example given above it is assumed that the pointer into the phrase table is to an encoded "Close Diskette Door".

**Claims**

1. Method for displaying one of a set of predetermined messages comprising a phrase made up of a number of words, each such message indicating a specific event which may occur in the input/output device (1), in a text processing system comprising furthermore a processor (2), a keyboard (6), a display (8) and a memory (4); said method comprising the following steps:

- upon receiving a message of event from said input/output device (1), said processor (2) calls into operation, a message build program (52) stored in the memory (4)

- said message build program outputs a message number to a message frame index table (56) stored in the memory (4) to obtain therefrom an appropriate pointer into a phrase table (57) stored in the memory (4),

- upon receiving the message from said message index table, the phrase table pointer is advanced to the next pointer and the first pointer position is substracted from the second pointer position to obtain the number of bits included in the phrase,

- the bits making up said phrase are compared with a decode table (58) stored in the memory (4) comprising words coded and ordered on a byte value/frequency of use basis, until a match is found thereby providing a word pointer,

- the word pointer is provided to a word table (59) stored in the memory (4) containing words encoded on a user basis to define the beginning of a word to be displayed which is transferred to a output buffer, and

- the contents of said output buffer are displayed when a test determines that the end of the phrase has been reached.

2. Method according to claim 1 including, upon the occurrence of a match by comparing with said decode table (58), determining any remainder of said selected phrase to be compared with said decode table based on the number of bits indication associated with the word resulting in the occurrence of a match, and sequentially comparing said remainder with said decode table.

3. Method according to claim 2 in which said remainder determined by a sum of said number of bits indication for previous words, is sequentially compared with said decode table (58) to obtain matches for all following words.

4. Method according to any one of claims 1 to 3 including dedicating an equal number of bit positions to each word, said number being sufficient to accomodate the highest byte value word in said phrase table (57).

5. Method according to claim 4 including padding each bit position not used in encoding said words with bits of equal binary value.

6. Method according to claim 5 in which said number of bits indication indicates the number of bits encoded for the associated word.

7. Method according to any one of claims 1 to 6 in which an event index includes pointers to each phrase in said phrase table (57).

8. Method according to any one of claims 1 to 7 in which words making said phrases in said phrase table (57) are not distinguished from one another by coding.

**Patentansprüche**

1. Methode zur Darstellung einer vorbestimmten Meldung aus einer Reihe von Meldungen, die aus einem Satz mit einer gewissen Anzahl von Worten bestehen, wobei jede Meldung ein spezifisches Ereignis anzeigt, dass in der Eingabe-/Ausgabevorrichtung (1), in einem Textverarbeitungssystem auftreten kann, das des weiteren einen Prozessor (2), eine Tastatur (6), eine Darstellungsvorrichtung (8) und einen Speicher (4) aufweist, wobei diese Methode durch folgende Schritte gekennzeichnet ist:

- Nach Erhalt einer Meldung über das Ereignis von der genannten Eingabe-/Ausgabevorrichtung (1) ruft der genannte Prozessor (2) eine Meldungsaufbauprogramm (52) auf, das im Speicher (4) abgelegt ist,

- Das genannnte Meldungsaufbauprogramm richtet eine Meldungsnummer an eine im Speicher (4) abgelegte Meldungsrahmenindextafel (56), um von dieser einen entsprechenden Markierer für eine im Speicher (4) abgelegte Satztafel (57) zu erhalten,

- Nach Erhalt der Meldung von der genannten Meldundsindextafel wird der Satztafelmarkierer zum nächsten Markierer vorgeschoben und die Position des ersten Markierers wird von der Position des zweiten Markierers abgezogen, um die im Satz enthaltene Bitzahl zu erhalten,

- Die Bits, aus denen der genannte Satz besteht, werden verglichen mit einer im Speicher (4) abgelagerten Decodiertafel (58), die aus kodierten und nach auf Nutzungsbasis beruhender Byte-Wert/-Frequenz geordneten Worten besteht, bis eine Übereinstimmung gefunden wird,

- Der Wortmarkierer wird einer im Speicher (4) abgelagerten Worttafel (59) übermittelt, die auf einer Nutzerbasis kodiert ist, um den Beginn eines darzustellenden Wortes zu definieren, das einem Ausgabepufferspeicher übermittelt wird, und

- Der Inhalt des genannten Ausgabepufferspeichers wird dargestellt, wenn ein Test feststellt, daß das Ende des Satzes erreicht ist.

2. Methode nach Anspruch 1, zu der, nach Vergleich mit der genannten Decodiertafel (58) und Erhalt einer Übereinstimmung, die Feststellung etwaiger Rückstände des genannten gewählten Satzes gehört, wobei diese mit der genannten Decodiertafel verglichen werden, welche auf Bitzahlanzeige und dem dazugehörigen Wort beruht, das im Falle einer Übereinstimmung daraus resultiert, und sequentieller Vergleich des genannten Rückstandes mit der genannten Decodiertafel.

3. Methode nach Anspruch 2, bei der der genannte, durch eine Summe der genannten Bitzahlanzeige für vorherige Worte bestimmte Rückstand sequentiell mit der genannten Decodiertafel (58) verglichen wird, um Übereinstimmung für alle folgenden Worte zu erhalten.

4. Methode nach allen der Ansprüche 1 bis 3, einschliesslich Zuteilung einer gleichen Anzahl von Bit-positionen für jedes Wort, wobei die genannte Anzahl ausreicht, auch das Wort mit dem höchsten Byte-Wert in der genannten Satztafel (57) abzudecken.

5. Methode nach Anspruch 4 einschliesslich Füllen jeder der beim Kodieren der genannten Worte nicht benutzten Bit-Position durch Bits mit gleichem binären Wert.

6. Methode nach Anspruch 5, bei der die genannte Zahl der Bitanzeige die Anzahl der Bits angibt, die für das dazugehörige Wort kodiert wurden.

7. Methode nach allen der Ansprüche 1 bis 6, bei der ein Ereignisindex Markierungen für jeden Satz in der genannten Satztafel umfasst.

8. Methode nach allen der Ansprüche 1 bis 7, bei der die Worte, aus denen die Sätze in der genannten Satztafel (57) bestehen, durch Kodieren nicht voneinander unterschieden werden.

**Revendications**

1. Procédé pour afficher un message faisant partie d'un ensemble de messages prédéterminés et comprenant une phrase composée d'un certain nombre de mots, chaque message indiquant un événement particulier susceptible de se produire dans le dispositif d'entrée/sortie (1), dans un système de traitement de texte comprenant en outre un processeur (2), un clavier (6), une unité d'affichage (8) et une mémoire (4), ledit procédé comprenant les étapes suivantes:

- lorsqu'il reçoit un message afférent à un événement dudit dispositif d'entrée/sortie (1), ledit processeur (2) appelle un programme (52) de construction de message stocké dans la mémoire (4),

- ledit programme de construction de message applique un numéro de message à une table index des messages (56) stockée dans la mémoire (4) de façon à obtenir un pointeur approprié dans une table de phrases (57) stockée dans la mémoire (4),

- à la réception du message de ladite table index des messages, on fait passerle pointeur de la table de phrases à la position suivante et la première position du pointeur est soustraite de la seconde pour obtenir le nombre de bits contenu dans la phrase,

- les bits constituant ladite phrase sont comparés avec une table de décodage (58) stockée dans la mémoire (4) et contenant des mots codés et ordonnés sur la base de la valeur des octets en fonction de la fréquence d'utilisation, jusqu'à ce qu'une correspondance soit obtenue, produisant ainsi un pointeur de mot,

- le pointeur de mot est fourni à une table de mots (59) stockée dans la mémoire (4) et contenant des mots codés en fonction deleur fréquence d'utilisation pour définir le début d'un mot à afficher qui est transféré à une mémoire tampon de sortie, et

- le contenu de ladite mémoire tampon de sortie est affiché lorsqu'un test indique que la fin de la phrase a été atteinte.

2. Procédé selon la revendication 1 comprenant, lorsqu'une correspondance est obtenue lors de la comparaison avec ladite table de décodage (58), une détermination du reste éventuel de ladite phrase choisie à comparer avec ladite table de décodage en fonction de l'indication du nombre de bits associée au mot qui a entraîné l'obtention d'une correspondance, et une comparaison séquentielle dudit reste avec ladite table de décodage.

3. Procédé selon la revendication 2 dans lequel ledit reste déterminé par la somme des indications dudit nombre de bits contenu dans des mots précédents, est comparé de façon séquentielle avec ladite table de décodage (58) afin d'obtenir des correspondances pour tous les mots suivants.

4. Procédé selon l'une quelconque des revendications 1 à 3 comprenant l'attribution d'un nombre égal de positions de bit à chaque mot, ledit nombre étant suffisant pour satisfaire le mot ayant la valeur d'octet la plus élevée dans ladite table de phrases (57).

5. Procédé selon la revendication 4 comprenant le remplissage, au moyen de bits de même valeur binaire, de chaque position de bit inutilisée lors du codage desdits mots.

6. Procédé selon la revendication 5 dans lequel ladite indication du nombre de bits précise le nombre de bits codés pour le mot associé.

7. Procédé selon l'une quelconque des revendications 1 à 6 dans lequel un index d'événement comprend des pointeurs désignant chaque phrase contenue dans ladite table de phrases (57).

8. Procédé selon l'une quelconque des revendications 1 à 7 dans lequel les mots constituant lesdites phrases dans ladite table de phrases (57) ne sont pas distingués les uns des autres au moyen d'un codage.

FIG. 1

| WORDS | PADDING | BYTE LENGTH | POINTERS |
|---|---|---|---|
| 0 0 0 1 | 1 1 1 1 1 1 1 1 | 3 | 6 |
| 0 0 1 1 | 1 1 1 1 1 1 1 1 | 3 | 12 |
| 0 1 0 0 | 1 1 1 1 1 1 1 1 | 4 | 3 |
| 0 1 0 1 | 1 1 1 1 1 1 1 1 | 4 | 7 |
| 0 1 1 0 | 1 1 1 1 1 1 1 1 | 4 | 4 |
| 0 1 1 1 | 0 1 1 1 1 1 1 1 | 5 | 11 |

12 BITS     4 BITS     8 BITS

FIG. 4

FIG. 2

FIG. 3

INTERRUPT FROM
DISKETTE DRIVE
DOOR BEING OPENED
3

PROCESSOR — 2

5

RANDOM ACCESS MEMORY

DISKETTE
ACCESS METHOD
PROGRAM
50

MESSAGE
SERVICES
PROGRAM
51

MESSAGE
BUILD
PROGRAM
52

OUTPUT
BUFFER
54

TO DISPLAY

MESSAGE/FRAME NUMBER
53

MESSAGE FRAME
INDEX TABLE
56

PHRASE
TABLE
57

DECODE
TABLE
58

WORD
TABLE
59

4

FIG. 5

```
          ┌──────────────┐
          │   MESSAGE     │──52
          │    BUILD      │
          └──────────────┘
                 │
          ┌──────────────────────┐
          │ OBTAIN POINTER INTO   │──60
          │ PHRASE TABLE          │
          └──────────────────────┘
                 │
          ┌──────────────────────┐
          │ ADVANCE POINTER & SUB-│
          │ TRACT TO DEFINE NUM-  │──61
          │ BER OF PHRASE BITS    │
          └──────────────────────┘
                 │
```

ACCUMULATE WORD POINTERS ──63

COMPARE PHRASE BITS WITH DECODE TABLE 58 ──62

READ WORD BYTE LENGTH ──64

USE WORD BYTE LENGTH TO ADVANCE PHRASE POINTER ──65

USE ACCUMULATED WORD POINTER TO OBTAIN BEGINNING OF WORD IN WORD TABLE ──66

ALL PHASE BITS DECODED ──68

NO

YES

TRANSFER WORD TO OUTPUT BUFFER ──67

NOTIFY MESSAGE SERVICES PROGRAM TO DISPLAY CONTENTS OF OUTPUT BUFFER ──69